# FASCICULE DE BREVET EUROPEEN

(11) **EP 1 167 297 B1**
(45) Date de publication et mention de la délivrance du brevet: **19.10.2005**
(21) Numéro de dépôt: 01401751.1
(22) Date de dépôt: 29.06.2001
(51) Int. Cl.: C02F 1/00, C02F 1/50, C02F 1/32, C02F 1/66, C02F 9/00, C02F 5/08

(54) **Procédé physico-chimique de traitement des eaux de piscine**
Verfahren zur physikalisch-chemischen Behandlung von Wasser eines Schwimmbeckens
Physical-chemical process for the treatment of swimming pool water

(30) Priorité: 30.06.2000 FR 0008569
(43) Date de publication de la demande: 02.01.2002
(73) Titulaire: Bio-UV SA, 34130 Mauguio (FR)
(72) Inventeur: Gillmann, Benoît, 34130 Mauguio (FR)
(74) Mandataire: Gosse, Michel

(56) Documents cités:
- DE-A- 3 910 366
- US-A- 5 449 658

## Description

L'invention est relative à un traitement des eaux de piscine consistant à effectuer, sur l'eau recyclée, au moins l'un des traitements suivants :
- un traitement physique de stérilisation à base d'ultraviolets de type C, apte à rendre l'eau désinfectée avec effet immédiat ;
- un traitement chimique à base d'un produit contenant une substance désinfectante de une substance algicide et une substance anti-tartre, apte à rendre l'eau désinfectante avec effet rémanent.

Les procédés les plus répandus utilisent :
- du chlore stabilisé ou du brome pour la désinfection et un composant algicide pour la lutte anti-algues avec pour principaux inconvénients : inconfort si la surveillance n'est pas parfaite, régulation du pH précise et fondamentale;
- l'électrolyse du sel qui fabrique de l'eau de Javel à partir du chlorure de sodium avec pour principal inconvénient : la corrosion;
- du Polymère d'HexaMéthylène Biguanide (PHMB) qui est un stérilisant puissant, bactéricide et fongicide à longue durée d'action, sans goût, ni odeur, non corrosif, très simple d'emploi, et qui est complémenté par un produit anti-algues de type peroxyde d'hydrogène. Utilisé seul, le PHMB engendre un traitement onéreux d'une part à cause des quantités nécessaires et, d'autre part, de son exploitation qui est manuelle.
L'état de la technique le plus proche est décrit dans les brevets :
- US-A-5449658 qui décrit le traitement des eaux recyclées des piscines par une substance désinfectante du type PHMB et une substance algicide et antitartre ;
- DE-3910366-A qui décrit un système et implicitement un procédé consistant à effectuer d'abord un traitement physique de stérilisation UV de type C (effet immédiat) et ensuite un traitement chimique additionnel à base d'un produit contenant une substance désinfectante et algicide (effet rémanent).

L'invention décrit un procédé de traitement des eaux des piscines qui est destiné à réduire la consommation des substances désinfectantes et plus particulièrement celle en de PHMB.
Le procédé en question, pour être efficace, doit combiner d'une part l'effet du traitement UV et d'autre part une pompe doseuse automatique qui injecte une dose journalière bien déterminée de PHMB.
Le traitement physique est réalisé au moyen d'un dispositif constitué d'une chambre de circulation de l'eau à stériliser contenant une lampe à ultraviolets du type C placée à l'intérieur d'un tube à quartz transparent.
Le traitement selon l'invention apporte une qualité d'eau, un confort et une tranquillité sans égal.
Une mise en oeuvre simple, un entretien et après-vente réduits, permettent d'optimiser sa fiabilité.
Le principe de traitement de l'eau associant un procédé physique (le rayonnement des UV-C) et l'ajout journalier du produit chimique rémanent, offrent un concept qui respecte l'environnement sans aucun résidu chimique nocif, tant pour les humains que pour la nature.

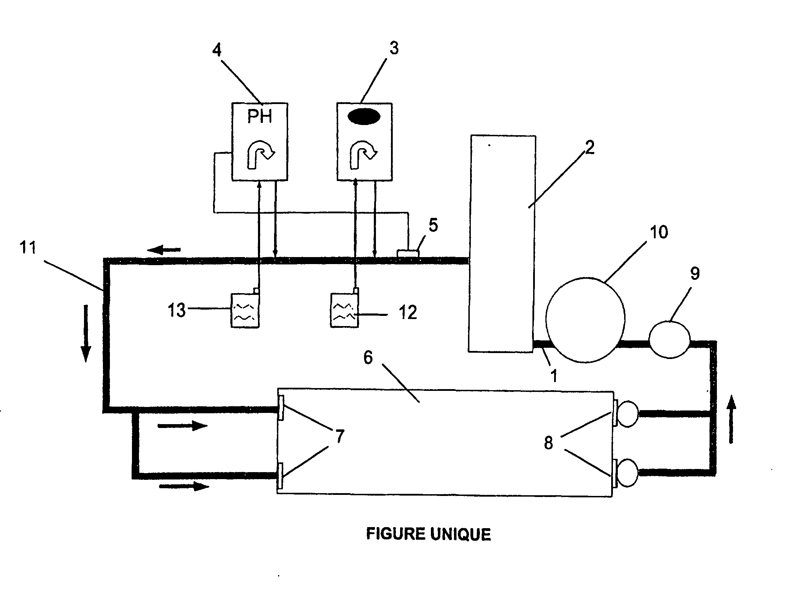

Les caractéristiques et les avantages de l'invention vont apparaître plus clairement à la lecture de la description détaillée qui suit d'au moins un mode de réalisation préféré de celle-ci donné à titre d'exemple non limitatif et représenté à la figure unique annexée qui est une vue d'ensemble de l'installation selon l'invention.
Le procédé de traitement des eaux de piscines, selon l'invention, consiste à effectuer, en combinaison, sur l'eau recyclée (1), au moins les traitements suivants :
- un traitement physique de stérilisation à base d'ultraviolets de type C, apte à rendre l'eau désinfectée avec effet immédiat;
- un traitement chimique à base d'un produit contenant une substance désinfectante de une substance algicide et une substance anti-tartre, apte à rendre l'eau désinfectante avec effet rémanent.
Le traitement physique est réalisé au moyen d'un dispositif (2) constitué d'une chambre de circulation de l'eau à stériliser contenant une lampe à ultraviolets du type C placée à l'intérieur d'un tube à quartz transparent.
Le traitement chimique est réalisé au moyen d'une pompe doseuse automatique (3) injectant une dose journalière déterminée du produit contenant les substances désinfectante du type Polymère d'HexaMéthylène Biguanide (PHMB), algicide et anti-tartre.
Le procédé, selon l'invention consiste également à effectuer, en addition, un traitement chimique de régulation du pH.
Ledit traitement chimique de régulation du pH est réalisé au moyen d'une pompe doseuse automatique (4) couplée à une sonde de pH (5).
L'ensemble représenté comporte en outre :
- un bassin (6) pourvu de buses de refoulement (7) et de skimmer (8);
- une pompe (9) et un filtre (10);
- la canalisation (1) contenant l'eau à traiter en sortie du filtre (10) et la canalisation (11) contenant l'eau traitée.

Les lampes à ultraviolets rayonnant à une longueur d'onde de 254 nano-mètres ont un pouvoir fortement bactéricide, virucide et algicide, reconnu depuis longtemps. Les ultraviolets de type C éradiquent les germes en perturbant fortement le métabolisme des cellules jusqu'à leur destruction totale. Il ne faut pas les confondre avec les lampes produisant de l'ozone, celles-ci travaillant à des longueurs d'ondes différentes. Le rayonnement ultraviolet nécessaire se mesure en micro-watts/seconde/cm².
Les éléments clés d'une désinfection efficace par les ultraviolets reposent, d'une part, sur le temps d'exposition (soit le rapport entre la taille de la cuve et le flux drainé par la pompe de filtration), d'autre part, sur l'énergie émise en micro-watts/seconde/cm² à la distance la plus éloignée de la lampe. Les lampes UV-C utilisées produisent 70.000 micro-watts à la distance de 6,5 cm. Cette énergie est déjà largement supérieure à celle nécessaire pour éradiquer les micro-organismes présents dans les piscines.
Les micro-organismes doivent être exposés aux micro-watts au minimum 1 seconde; cependant, les caractéristiques desdites lampes en fonction des débits recommandés portent à 2 secondes minimum le temps d'exposition pour une désinfection optimale. Pour ne pas gêner l'action des UV-C, il est bien entendu nécessaire d'avoir une qualité de filtration de bon niveau afin que les particules de taille trop importante ne viennent pas faire écran.
Les temps de filtration recommandés par les professionnels doivent être respectés et ainsi plusieurs passages dans la chambre de l'appareil seront possibles par 24 heures (par exemple pour une eau à 26° C, le temps de filtration sera de 13 heures au moins). Le rayonnement ultraviolet, procédé physique, se produit à l'intérieur de la chambre, au fur et à mesure du passage de la lame d'eau et tout au long du cycle de filtration : l'eau est ainsi désinfectée.
Cependant, l'eau du bassin va être polluée par les baigneurs et les différents phénomènes extérieurs qui vont apporter de nombreux micro-organismes. Il est donc nécessaire, entre 2 passages dans la chambre UV, de rendre l'eau désinfectante.
Afin de faciliter cette étape indispensable, une pompe doseuse a été conçue pour injecter automatiquement une petite dose journalière de produit désinfectant, algicide et anti-tartre. Ce procédé complet permettra, grâce à l'association de l'action des lampes UV-C et de la pompe doseuse de rendre l'eau désinfectée et désinfectante pour le plus grand confort des baigneurs.
Les différentes matières présentes dans l'eau sont :
- les algues : ces végétaux peuvent se développer dans le bassin, c'est l'air qui les transporte en grande quantité ; pour les combattre, un désinfectant seul serait consommé en priorité au détriment de son action bactéricide ; pour cette raison, le produit selon l'invention contient également un algicide ;
- les matières organiques : véhiculées par les baigneurs, la nature et l'environnement, non nocives, elles doivent être retenues par la filtration et les divers procédés de traitement ;
- les micro-organismes : bactéries, virus et champignons sont apportés par les mêmes vecteurs et peuvent nuire à la santé, le rôle de l'appareil ultraviolet selon l'invention est de les détruire ; l'ajout de produit rémanent assure la rémanence dans le bassin et évite leur développement entre 2 passages dans l'appareil à ultraviolets ;
- les ions métalliques : fer, cuivre, manganèse, ... ; ils peuvent se trouver en quantité importante dans les eaux de forage, ou suite à des traitement de culture aux environs (sulfatage), endommagent les revêtements (liner), peuvent colorer l'eau, il faut éviter les eaux de forage pour le remplissage des piscines ; il est possible de séquestrer ces ions avec des produits spécifiques;
- les phosphates et nitrates : ils sont présents en quantité très variable et favorisent le développement des algues ; ils peuvent témoigner d'une pollution de la nappe phréatique.
Les avantages du procédé selon l'invention sont nombreux :
- une eau désinfectée grâce aux UV-C de la chambre à ultraviolets;
- une eau désinfectante grâce à l'ajout journalier en petite quantité de produit rémanent;
- une installation simple, rapide et fiable (pas d'électronique);
- un service après-vente réduit : changement de la lampe toutes les 9.000 heures, vérification de la propreté du tube quartz;
- pas de chlore, pas de sel, pas de résidus chimiques nocifs;
- un procédé automatique grâce à la pompe doseuse de produit rémanent;
- respecte l'environnement :
   .. les ultraviolets : action physique
   .. le produit rémanent : élimination naturelle, pas de résidus chimiques nocifs
- compatible avec tous types de revêtement et de matériaux;
- assure une eau cristalline (pouvoir légèrement floculant);
- compatible avec tous types de filtration;
- efficacité moins dépendante du pH (il est malgré tout conseillé de réguler le pH de l'eau dans les valeurs standards.);
- une eau confortable, saine, douce et soyeuse : la peau et les cheveux ne sont plus desséchés, les muqueuses ne sont plus fragilisées, le risque de mycose est réduit, les yeux et les sinus ne sont plus irrités, il n'y a pas de risque d'allergie, en cas d'ingestion accidentelle, il n'y a pas d'effets indésirables à craindre ;
- sur le plan économique : le système selon invention n'attaque pas les joints de carrelage, ne vieillit pas prématurément les liners, préserve la durée de vie des pompes et des filtres, évite tous les phénomènes d'osmose sur les piscines monocoques liés aux dérivés chlorés. Le système en question nécessite une quantité faible de produits et d'entretien.

Bien entendu, l'invention n'est pas limitée aux modes de réalisation décrits et représentés pour lesquels on pourra prévoir d'autres variantes, en particulier dans :
- le type de pompes doseuses utilisées;
- le type de dispositif à ultraviolets utilisé;
- le type de produits additionnels au PHMB qui constitue le composant de base pour le traitement chimique.

## Revendications

1. Procédé de traitement des eaux de piscines consistant à effectuer, sur l'eau recyclée (1), au moins l'un des traitements suivants :
- un traitement physique de stérilisation à base d'ultraviolets de type C, apte à rendre l'eau désinfectée avec effet immédiat;
- un traitement chimique à base d'un produit contenant une substance désinfectante de une substance algicide et une substance anti-tartre, apte à rendre l'eau désinfectante avec effet rémanent ;
**caractérisé en ce qu'**il combine lesdits traitements physique et chimique en utilisant, comme substance désinfectante, du Polymère d'HexaMéthylène Biguanide (PHMB) et en la diffusant au moyen d'une pompe doseuse automatique (3) injectant une dose journalière déterminée de PHMB et de substances algicides et anti-tartre.

2. Procédé, selon la revendication 1, **caractérisé en ce qu'**il consiste à effectuer, en addition, un traitement chimique de régulation du pH.

3. Procédé, selon la revendication 2, **caractérisé en ce que** le traitement chimique de régulation du pH est réalisé au moyen d'une pompe doseuse automatique (4) couplée à une sonde de pH (5).

4. Procédé, selon la revendication 1, **caractérisé en ce qu'**un réservoir (12), contenant le produit destiné au traitement chimique, est associé à la pompe doseuse automatique (3).

5. Procédé, selon la revendication 3, **caractérisé en ce qu'**un réservoir (13) contenant le produit destiné à la régulation du pH est associé à la pompe doseuse automatique (4).

## Patentansprüche

1. Verfahren zur Aufbereitung von Schwimmbadwasser, das darin besteht, dass man an dem im Kreislauf geführten Wasser (1) mindestens eines der folgenden Aufbereitungsverfahren durchführt:
- eine physikalische Sterilisationsaufbereitung auf der Basis von ultravioletter Strahlung vom Typ C, mit dem sich das Wasser mit sofortiger Wirkung desinfizieren lässt;
- ein chemisches Aufbereitungsverfahren auf der Basis eines Produkts, das ein Desinfektionsmittel aus einer algentötenden Substanz sowie eine Ablagerungen verhindernde Substanz enthält, mit dessen Hilfe sich das Wasser mit nachhaltiger Wirkung desinfizieren lässt;
**dadurch gekennzeichnet, dass** das genannte physikalische mit dem chemischen Aufbereitungsverfahren **dadurch** kombiniert wird, dass man als Desinfektionsmittel Hexamethylenbiguanid (PHMB)-Polymer verwendet und dieses mittels einer automatischen Dosierpumpe (3) eindiffundieren lässt, indem man eine bestimmte Tagesdosis an PHMB sowie an algentötenden und Ablagerungen verhindernden Substanzen einspritzt.

2. Verfahren nach Anspruch 1, **dadurch gekennzeichnet, dass** es darin besteht, dass man außerdem ein chemisches Verfahren mit pH-Regulierung durchführt.

3. Verfahren nach Anspruch 2, **dadurch gekennzeichnet, dass** das chemische Aufbereitungsverfahren mit pH-Regulierung mittels einer an einen pH-Meter (5) gekoppelten automatischen Dosierpumpe (4) erfolgt.

4. Verfahren nach Anspruch 1, **dadurch gekennzeichnet, dass** mit der automatischen Dosierpumpe (3) ein Vorratsbehälter (12) in Verbindung steht, der das für die chemische Aufbereitung vorgesehene Produkt enthält.

5. Verfahren nach Anspruch 3, **dadurch gekennzeichnet, dass** mit der automatischen Dosierpumpe (4) ein Vorratsbehälter (13) in Verbindung steht, der das für die pH-Regulierung vorgesehene Produkt enthält.

## Claims

1. Method for treating swimming pool water consisting in carrying out, on the recycled water (1), at least one of the following treatments:
- a physical sterilisation treatment based on C type ultraviolet light, suitable for disinfecting water with immediate effect ;
- a chemical treatment based on a product containing a disinfectant substance from an algaecide substance and an anti-tartar substance, suitable for disinfecting water with persistent effect;
**characterised in that** it combines said physical and chemical treatments by using hexamethylene biguanide (PHMB) polymer, as a disinfectant substance, and diffusing it by means of an automatic dosage pump (3) and injecting a determined daily dosage of PHMB and algaecide and anti-tartar substances.

2. Method, according to claim 1, **characterised in that** it consists in carrying out, in addition, a chemical pH regulation treatment.

3. Method, according to claim 2, **characterised in that** the chemical pH regulation treatment is carried out by means of an automatic dosage pump (4) joined to a pH probe (5).

4. Method, according to claim 1, **characterised in that** a tank (12), containing the product intended for the chemical treatment, is connected to the automatic dosage pump (3).

5. Method, according to claim 3, **characterised in that** a tank (13) containing the product intended for regulating the pH is connected to the automatic dosage pump (4).
